(19) Europäisches Patentamt
European Patent Office
Office européen des brevets

(11) EP 2 681 791 B1

(12) FASCICULE DE BREVET EUROPEEN

(45) Date de publication et mention
de la délivrance du brevet:
**25.03.2015 Bulletin 2015/13**

(21) Numéro de dépôt: **12712133.3**

(22) Date de dépôt: **28.02.2012**

(51) Int Cl.:
*H01M 8/04* *(2006.01)*   *H01M 8/24* *(2006.01)*
*H01M 8/10* *(2006.01)*

(86) Numéro de dépôt international:
**PCT/FR2012/000072**

(87) Numéro de publication internationale:
**WO 2012/117172 (07.09.2012 Gazette 2012/36)**

(54) **Pile à combustible à chambre anodique comportant dans la chambre anodique une surface de condensation et d'évacuation d'eau, et procédé de condensation et d'évacuation d'eau formée dans ladite chambre**

Brennstoffzelle mit einer Anodenkammer mit einer Oberfläche zur Kondensation und Entfernung von Wasser sowie Verfahren zur Kondensation und Entfernung von in der Anodenkammer gebildetem Wasser

Fuel cell comprising an anode chamber comprising a surface for condensing and removing water and method for condensing and removing water formed in said chamber

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2011 FR 1100628**

(43) Date de publication de la demande:
**08.01.2014 Bulletin 2014/02**

(73) Titulaire: **Commissariat à l'Énergie Atomique et aux Énergies Alternatives**
**75015 Paris (FR)**

(72) Inventeurs:
• **FAUCHEUX, Vincent**
**F-38250 Lans en Vercors (FR)**
• **LATOUR, Antoine**
**F-38000 Grenoble (FR)**
• **THERY, Jessica**
**F-38600 Fontaine (FR)**
• **VALON, Bruno**
**F-38100 Grenoble (FR)**

(74) Mandataire: **Talbot, Alexandre**
**Cabinet Hecké**
**Europole**
**10, rue d'Arménie - BP 1537**
**38025 Grenoble Cedex 1 (FR)**

(56) Documents cités:
**US-A1- 2003 068 543     US-A1- 2008 057 367**
**US-A1- 2009 092 865     US-A1- 2009 263 688**

**Description**

**Domaine technique de l'invention**

L'invention est relative à une pile à combustible comprenant une chambre anodique dans laquelle débouche une arrivée d'hydrogène.

**État de la technique**

Dans les piles à combustible de type à chambre anodique pouvant héberger une ou plusieurs anodes, la production d'électricité se fait grâce à l'oxydation sur une anode d'un combustible de type hydrogène, et à la réduction sur une cathode d'un oxydant de type oxygène de l'air. De manière générale, l'anode et la cathode sont séparées par une membrane électrolytique souvent en Nafion®. Dans l'exemple particulier de l'hydrogène en tant que combustible, ce dernier se dissocie au niveau de l'anode ($H_2 \rightarrow 2H^+ + 2e^-$) pour donner des ions $H^+$ qui traversent la membrane et réagissent au niveau de la cathode, où circule l'oxydant, de sorte à générer de l'eau

$$(\frac{1}{2}O_2 + 2H^+ + 2e^- \rightarrow H_2O).$$ Cependant, une partie de l'eau générée côté cathode rétrodiffuse par la membrane, et se retrouve sous la forme de vapeur dans la chambre anodique. En fonction des conditions extérieures (température, humidité) et de travail (rendement, confinement du système), cette rétrodiffusion peut concerner 10% à 40% de l'eau générée au niveau de la cathode.

Par ailleurs si l'hydrogène est généré en amont de l'anode par hydrolyse d'un hydrure chimique, ceci impose qu'une certaine charge en eau est présente dans le gaz, résultant de l'hydrolyse, amené au niveau de l'anode.

Ainsi, lors du fonctionnement de la pile à combustible, la chambre anodique se remplie de vapeur d'eau qui se condense petit à petit, entraînant une diminution du rendement de la pile à combustible dans la mesure où l'eau condensée gêne le passage de l'hydrogène vers des sites catalytiques de l'anode.

Le document US2006/0121326 décrit une pile à combustible munie, au niveau d'une anode, d'un canal d'arrivée d'hydrogène, et d'un canal de sortie l'hydrogène n'ayant pas réagi et d'impuretés. Ce canal de sortie est configuré pour purger les impuretés, il comporte une vanne qui s'ouvre pendant une période déterminée.

Le système de purge du document US2006/0121326 ne peut pas être appliqué aux piles à combustible du type à chambre anodique. En effet dans ces dernières, l'eau se condense dans la chambre anodique et devient stagnante. La pile à combustible pouvant fonctionner dans toutes les positions, il est difficile de placer une vanne de purge sans entraîner une perte conséquente du rendement de la pile à combustible lors de l'évacuation de l'eau stagnante, car un volume conséquent d'hydrogène serait alors aussi évacué hors de la chambre anodique.

Une pile à combustible pourvue de moyens d'évacuation d'eau condensée est décrite dans le document US 2003/0068543.

**Objet de l'invention**

L'objet de l'invention vise à réaliser une pile à combustible apte à réaliser une purge efficace d'eau contenue dans la chambre anodique quelle que soit la position de la pile à combustible. On tend vers cet objet par les revendications annexées.

Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente une vue en coupe d'un premier mode de réalisation d'une pile à combustible,
- la figure 2 représente une vue en coupe d'un second mode de réalisation d'une pile à combustible,
- la figure 3 représente une vue en coupe d'une variante du second mode de réalisation d'une pile à combustible,
- la figure 4 illustre une vue en coupe centrée sur une région de condensation équipée d'un capteur de présence d'eau,
- la figure 5 illustre une vue en coupe centrée sur une région de condensation équipée d'un élément de stockage et d'évaporation d'eau,
- la figure 6 illustre une variante de réalisation de régions de condensation.

**Description de modes préférentiels de l'invention**

La pile à combustible décrite ci-après permet d'évacuer l'eau condensée dans la chambre anodique, notamment par rétrodiffusion de l'eau générée au niveau de la cathode de la pile à combustible, lors de son fonctionnement grâce à une zone favorisant à la fois la condensation de l'eau et l'évacuation de l'eau condensée.

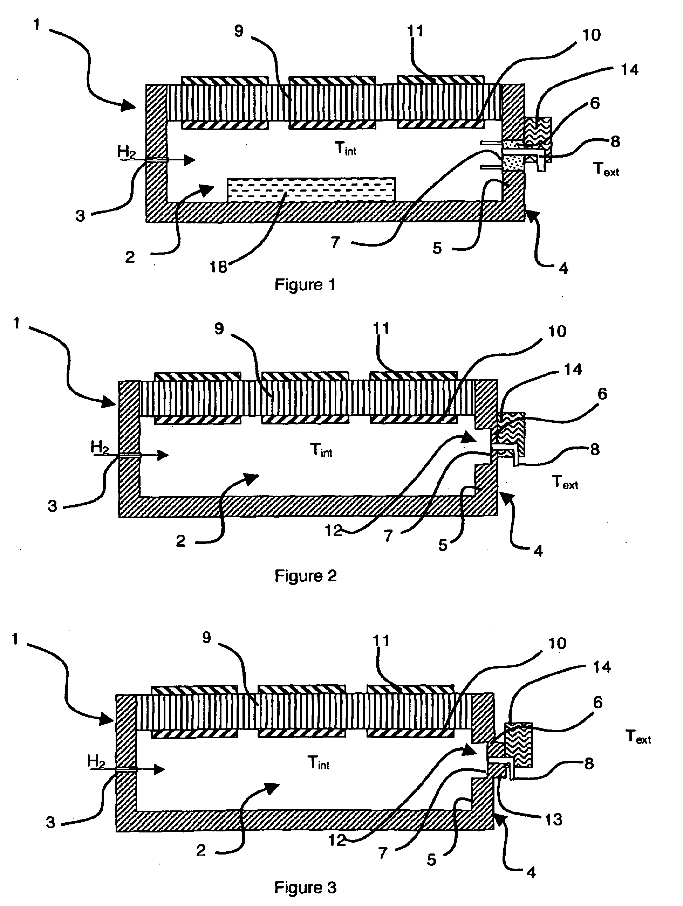

Sur les figures 1 à 3, la pile à combustible 1 comprend une chambre anodique 2 dans laquelle débouche une arrivée 3 d'hydrogène. Une paroi 4 sépare l'intérieur de l'extérieur de la chambre anodique 2. La paroi 4 comporte une région principale 5 ayant une première résistance thermique de conduction entre l'extérieur et l'intérieur de la chambre anodique 2. La paroi 4 comporte en outre une région de condensation d'eau 6 privilégiée ayant une seconde résistance thermique de conduction entre l'extérieur et l'intérieur de la chambre anodique 2 strictement inférieure à la première résistance thermique de conduction de sorte à délimiter une surface 7 de condensation d'eau à l'intérieur de la chambre anodique 2.

Un canal 8 d'évacuation de l'eau condensée relie la surface de condensation 7 à l'extérieur de la chambre anodique 2. Préférentiellement, le canal 8 d'évacuation traverse la région de condensation d'eau 6. Le canal 8 d'évacuation peut comporter un état ouvert dans lequel l'eau peut être évacuée et un état fermé dans lequel l'intérieur de la chambre anodique 2 est étanche par rapport à l'extérieur de la chambre anodique 2 au niveau dudit canal 8 d'évacuation. Le canal d'évacuation 8 peut être un capillaire. Le capillaire forme un tube permettant le déplacement de l'eau dans ledit tube par surpression de l'intérieur de la chambre anodique 2 vers l'extérieur de la chambre anodique 2.

Cette disposition particulière permet de favoriser la condensation de l'eau présente sous forme vapeur dans la chambre anodique 2 sur la surface de condensation 7. Ceci est rendu possible par la présente pile à combustible en exploitant la différence de température au niveau de la paroi 4 entre l'intérieur et l'extérieur de la chambre anodique 2 de sorte qu'au moins un point de la surface interne de la chambre anodique 2 (ici la surface de condensation 7) soit à une température strictement inférieure au reste de la région principale 5.

En fait, la résistance thermique de conduction permet de définir un élément en fonction de sa résistance au passage d'un flux de conduction thermique entre deux surfaces. Ainsi, plus la résistance thermique est forte, moins la quantité de chaleur traversant l'élément est élevée. Par définition, on dira qu'un matériau isolant thermiquement possède une résistance de conduction thermique importante. Dès lors, les caractéristiques particulières de la région principale 5 et de la région de condensation 6 définies ci-dessus permettent de favoriser la condensation en un point particulier d'une pile à combustible, préférentiellement lorsque la température intérieure $T_{int}$ de la chambre anodique 2 est strictement supérieure à la température extérieure $T_{ext}$ de la chambre anodique 2.

Sur l'exemple particulier des figures 1 à 3, la chambre anodique 2 peut comporter plusieurs parois délimitant avec une membrane électrolytique 9 et/ou au moins une anode 10, l'intérieur de la chambre anodique 2. Une paroi comporte une première surface délimitant au moins une partie de l'intérieur de la chambre anodique 2 et une seconde surface délimitant au moins une partie de l'extérieur de la chambre anodique 2. La membrane 9, par exemple en Nafion® est en contact avec l'anode 10 disposée à l'intérieur de la chambre anodique 2. Une cathode 11 associée à l'anode est disposée contre la membrane 9 à l'extérieur de la chambre anodique 2. Selon l'exemple illustré, la pile à combustible 1 comporte plusieurs cellules élémentaires (trois dans l'exemple) délimitées par des paires d'électrodes (anode/cathode), chaque paire étant séparée par une membrane électrolytique 9. Une membrane électrolytique 9 peut être propre à chaque cellule élémentaire. Dans ce cas, la pile à combustible comporte plusieurs membranes individuelles correspondant chacune à une cellule élémentaire. Selon une alternative, une même membrane électrolytique 9 est commune à au moins deux cellules élémentaires. Les anodes sont toutes disposées dans la chambre anodique 2 de sorte que l'hydrogène puisse diffuser sur des sites catalytiques des anodes pour favoriser la réaction $H_2 \rightarrow 2H^+ + 2e^-$. Lorsque la pile à combustible comporte plusieurs parois, ces parois comportent chacune au moins une région principale. Au moins une des parois comporte au moins une région de condensation 6 ayant les propriétés susmentionnées. De préférence, la membrane a une résistance thermique de conduction supérieure à celle de la ou les régions de condensation afin d'éviter la condensation d'eau au niveau des anodes dans la chambre anodique 2. De préférence, la résistance thermique de conduction d'une région de condensation 6 entre l'intérieur et l'extérieur de la chambre est strictement inférieure à la résistance thermique de conduction entre l'intérieur et l'extérieur de la chambre de toutes les régions principales. Bien entendu, une paroi peut comporter plusieurs régions de condensations et leurs canaux d'évacuation associés. Par ailleurs, les différentes parois peuvent chacune comporter une ou plusieurs régions de condensation et leurs canaux d'évacuation associés.

La figure 1 illustre un premier mode de réalisation dans lequel la région de condensation 6 est formée par un insert comblant un trou de la paroi 4 faisant communiquer l'intérieur de la chambre anodique 2 avec l'extérieur de la chambre anodique 2.

De préférence, l'insert est réalisé dans un matériau dont la conductivité thermique est supérieure au(x) matériau(x) utilisé(s) pour délimiter la région principale 5. Par exemple, la région principale 5 peut être réalisée dans un matériau plastique isolant thermiquement, et l'insert dans un métal, par exemple de l'aluminium, de l'inox, du cuivre, du nickel, etc. La forme de l'insert est préférentiellement cylindrique ou conique, cependant toute forme permettant d'être insérée dans un trou correspondant de la paroi 4 peut convenir. L'insert assure aussi, de préférence, l'étanchéité de la chambre anodique 2 afin d'éviter les pertes d'hydrogène de l'intérieur de la chambre anodique 2 vers l'extérieur de la chambre anodique 2 au niveau dudit insert lorsque le canal 8 d'évacuation est fermé. L'insert peut être collé ou inséré en force. L'insert est, de préférence, recouvert d'une couche protectrice évitant sa corrosion à l'intérieur et à l'extérieur de la chambre 2. La surface de l'insert formant la surface 7 de condensation à l'intérieur de la chambre anodique 2 est, de préférence, comprise entre 0,05mm² et 1cm². Ces superficies correspondent sensiblement à la taille d'une goutte d'eau apte à se former par condensation dans une chambre anodique d'une pile à combustible de 10W.

L'insert peut aussi être formé uniquement par le canal d'évacuation 8 lorsque ce dernier est un capillaire, dans ce cas, la surface 7 de condensation est égale à la section du capillaire.

Sur la figure 2 illustrant un second mode de réalisation, la région de condensation 6 est formée par un amincissement 12 local de la paroi 4 dans la chambre anodique 2. L'amincissement local de la paroi 4 peut se présenter sous la forme d'un renfoncement pratiqué dans la paroi 4 à l'intérieur de la chambre anodique 2. Autrement dit, la région principale 5 a une épaisseur strictement supérieure à l'épaisseur de la région de condensation 6. Ainsi, même si la région principale 5 et la région de condensation 6 sont formées dans un même matériau, les résistances thermiques de conduction thermique entre l'intérieur de la chambre anodique 2 et l'extérieur de la chambre anodique 2 seront différentes. Dans ce mode de réalisation, le canal d'évacuation 8 relie, de préférence, le fond de l'amincissement 12 à l'extérieur de la chambre anodique 2. Le fond de l'amincissement 12 forme alors la surface de condensation 7.

La figure 3 illustre une variante du second mode de réalisation. Dans cette variante, la région de condensation 6 est à la fois formée par un amincissement local 12, et par une excroissance 13 disposée à l'extérieur de la chambre anodique 2 au niveau de l'amincissement 12 local.

L'excroissance 13 joue dans cette variante un rôle en favorisant les échanges thermiques entre l'extérieur de la chambre anodique 2 et la surface de condensation 7 par l'augmentation de la surface d'échange thermique à l'extérieur de la chambre anodique 2.

Le second mode de réalisation et sa variante présentent un avantage de réalisation par rapport au premier mode de réalisation. En effet, l'étanchéité de la chambre anodique 2 sera plus facile à réaliser à partir d'un amincissement local de la paroi 4 dans la chambre anodique 2 qu'avec le report d'un insert dans un trou de la paroi 4 comme à la figure 1.

Dans les différents modes de réalisation visés ci-dessus, l'état fermé ou ouvert du canal 8 d'évacuation peut être mis en oeuvre par une vanne 14 (figures 1 à 3). Autrement dit, le canal 8 d'évacuation est relié à une vanne 14 contrôlant l'évacuation de l'eau condensée sur la surface 7 de condensation par ledit canal 8 d'évacuation.

Selon une mise en oeuvre pour une pile de 10W qui fournit environ 1 g d'eau par heure, la vanne 14 peut être ouverte pendant 1 ms toute les 10s. Cependant cette mise en oeuvre séquentielle engendre une perte d'hydrogène dans le cas où de l'eau condensée ne serait pas présente au niveau de la surface de condensation 7. Il existe donc un besoin de limiter les pertes d'hydrogène lors du fonctionnement de la pile à combustible 1.

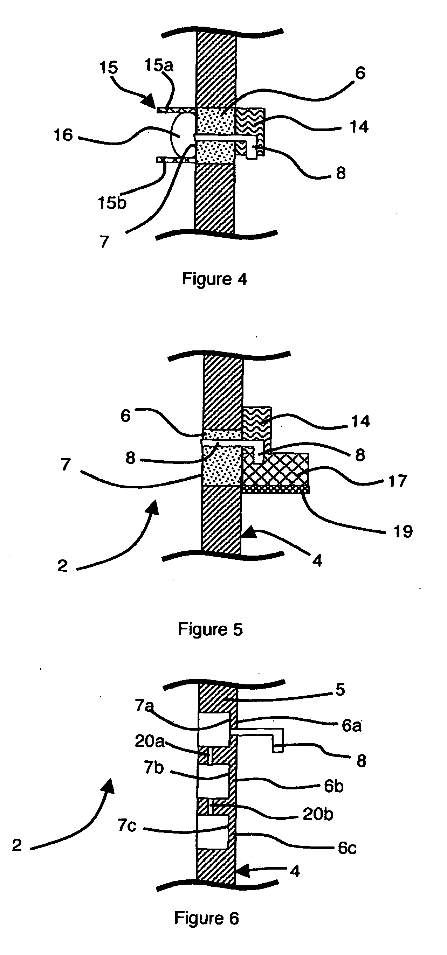

Sur la figure 4, pour répondre à ce besoin, la surface de condensation 7 de la région 6 est agencée avec un capteur 15 de présence d'eau sur ladite surface de condensation 7. Ce capteur 15 de présence est relié à la vanne 14 de sorte à déclencher une évacuation en cas de présence d'eau 16 sur la surface de condensation 7. Par exemple, le capteur 15 de présence est connecté à un élément de contrôle (non représenté) lui-même connecté à la vanne 14. Ce capteur de présence 15 peut comporter deux bornes 15a, 15b électriquement conductrices isolées électriquement l'une de l'autre, et disposées au niveau de la surface de condensation 7 de sorte à être mises en contact électrique en cas de présence d'eau sur la surface de condensation 7. De préférence, le canal 8 comporte une ouverture disposée entre les bornes 15a, 15b du capteur de présence 15. En mesurant la conductivité électrique au niveau des bornes 15a, 15b, il est possible de détecter la présence ou non d'eau liquide. Si l'eau est absente, le circuit formé par les deux bornes 15a, 15b est en circuit ouvert et la résistance est infinie. Si de l'eau 16 est présente (comme sur la figure 4), la conduction électrique entre les deux bornes 15a, 15b est détectée. Dès lors, en fonction des signaux du capteur 15 de présence, l'élément de contrôle peut décider d'ouvrir ou non la vanne 14. Ainsi, en déclenchant une évacuation à un moment où l'on est sûr d'avoir de l'eau sur la surface de condensation 7, on limite la perte d'hydrogène. De plus, grâce au capteur 15 de présence, l'évacuation peut être arrêtée dès que circuit formé par les deux bornes 15a, 15b repasse en circuit ouvert. Le capteur 15 de présence peut être adapté à tous les modes de réalisation et variantes décrits.

Sur la figure 5, de manière générale appliquée à tous les modes de réalisation, et leurs variantes, décrits ci-dessus, le canal 8 d'évacuation est relié à un élément 17 de stockage et d'évaporation d'eau liquide disposé à l'extérieur de la chambre anodique 2 et agencé avec le canal 8 d'évacuation, et de préférence avec la vanne 14, de sorte à absorber l'eau extraite de l'intérieur de la chambre anodique 2. Sur l'exemple de la figure 5, le canal 8 d'évacuation débouche dans l'élément 17 de stockage et d'évaporation qui est fixé contre la surface extérieure de la paroi 4 de la chambre anodique 2, de préférence contre la région de condensation 6. Autrement dit, l'élément de stockage et d'évaporation est en contact avec l'insert dans le premier mode de réalisation, et en contact avec la paroi sur la surface extérieure au niveau de l'amincissement local, ou de l'excroissance, selon le second mode de réalisation et sa variante.

Lorsque l'élément 17 de stockage et d'évaporation est au moins en partie imbibé par l'eau évacuée par le canal 8 d'évacuation, par exemple grâce à la vanne 14, cette eau en contact avec l'air extérieur à la chambre anodique 2 s'évapore, entraînant un refroidissement de l'élément 17 de stockage et d'évaporation. Ainsi, l'élément 17 de stockage et d'évaporation, en contact avec la région de condensation 6, et plus particulièrement sur la surface extérieure de la paroi 4, transmet par transfert thermique sa température à la surface de condensation 7 à l'intérieur de la chambre anodique 2. Ainsi, le contact entre la région de condensation 6 et l'élément 17 est tel que le transfert thermique entre l'élément 17 et la région 6 soit favorisé. L'élément 17 de stockage et d'évaporation est, de préférence, suffisamment poreux pour permettre une évaporation en continue de l'eau. Une taille de pores comprise entre 1μm et 1 mm est préférable pour réaliser à bien la fonction d'évaporation. Le volume total de pores est, de préférence, suffisant pour absorber toute la quantité d'eau évacuée lors d'une évacuation, il sera donc fonction de la puissance de la pile à combustible, et de la réaction par rétrodiffusion. L'élément 17 de stockage et d'évaporation peut avoir une forme quelconque par exemple une mousse parallélépipédique favorisant l'évaporation de l'eau. Cet élément 17 de stockage et d'évaporation peut être formé en céramique, en polymère ou de préférence en métal pour constituer un très bon conducteur thermique.

De manière expérimentale, il a été réalisé un élément 17 de stockage et d'évaporation sous la forme d'une mousse de Nickel comprenant des pores de 400 microns pour une épaisseur de mousse de 1,6mm sur une surface de 1cm$^2$. De l'eau correspondant à l'eau générée par le fonctionnement d'une pile à combustible de 5W a été acheminée dans la mousse en Nickel. La baisse de température au niveau de la mousse de Nickel a été de trois degrés Celsius pour une température ambiante de 22°C au niveau de la mousse. Cette différence de température est suffisante pour créer un point froid à la surface de condensation 7, même si la température dans la chambre anodique 2 est la même que la température extérieure à la chambre anodique 2. C'est pour cela qu'il est préférable de disposer l'élément 17 de stockage et d'évaporation contre la région de condensation 6 à l'extérieur de la chambre anodique 2, de sorte que la température de l'élément 17 de stockage et d'évaporation diffuse en direction de la surface de condensation 7 pour en diminuer la température.

Ainsi, dans le cas où la température dans la chambre anodique 2 est égale à la température à l'extérieur de la chambre anodique 2, lors de la mise en marche de la pile à combustible, cette dernière aura une phase d'initialisation dans laquelle des gouttes d'eau se formeront de manière aléatoire sur la surface interne de la chambre anodique 2, et lorsqu'une goutte se formera au niveau de la surface de condensation 7, cette goutte sera évacuée dans l'élément 17 de stockage et d'évaporation. Dès évacuation de la première goutte, l'eau dans l'élément 17 de stockage et d'évaporation va entraîner, par l'évaporation de l'eau condensée extraite, une diminution de la température de cet élément 17 de stockage et d'évaporation comme démontré ci-dessus. La température de l'élément 17 de stockage et d'évaporation par son contact avec la région de condensation 6 va abaisser la température de la surface de condensation 7 dans la chambre anodique 2. Dès lors, l'eau ne se condensera plus qu'au niveau de la région de condensation 6 sur la surface de condensation 7, et la pile à combustible sera dans un état appelé régime permanent de fonctionnement.

Bien entendu, afin d'éviter la phase d'initialisation, il est possible de pré-imprégner l'élément 17 de stockage et d'évaporation avant la mise en route de la pile à combustible, ou de placer la pile à combustible dans un environnement tel que la température $T_{int}$ à l'intérieur de la chambre anodique 2 soit strictement supérieure à la température à l'extérieur $T_{ext}$ de la chambre anodique 2.

De manière générale applicable à tous les modes de réalisation et leurs variantes, un matériau poreux hydrophile 18 (figure 1) peut être disposé dans la chambre anodique 2 pour éviter que des gouttes formées sur sa surface interne autre que sur l'anode 10 ne se détachent lors d'un choc, et tombent sur l'anode avec le risque de combler des sites catalytiques et de diminuer ainsi le rendement de ladite pile à combustible.

En effet, la pile à combustible décrite présente la particularité, grâce à sa surface 7 favorisant la condensation, d'être utilisée dans toutes les conditions et positions. Ce matériau poreux hydrophile 18 peut occuper toute ou partie de la surface interne de la chambre anodique 2 à l'exception de l'anode 10 et de la membrane 9, et être composé d'un matériau polymère, de cellulose ou tout autre type de matériau hydrophile. Avantageusement, le matériau poreux hydrophile 18 sera au moins disposé sur la surface de condensation 7 de sorte à maintenir l'eau condensée au niveau ladite surface de condensation 7 jusqu'à l'évacuation de cette eau par le canal 8.

Lors de l'évacuation de l'eau condensée, même si la perte d'hydrogène est minimisée par rapport à l'art antérieur, cette perte n'est pas totalement évitée à 100%. En effet, lors d'une évacuation de l'eau condensée, l'hydrogène pourrait sortir de la chambre anodique 2, notamment si l'hydrogène de la chambre anodique 2 est à une pression supérieure à la pression de l'air ambiant à l'extérieur de la chambre (typiquement la pression dans la chambre anodique est strictement supérieure à 1 bar). Or, pour des considérations écologiques, il est préférable d'éviter de rejeter l'hydrogène dans l'atmosphère. Pour répondre aux besoins du respect de l'environnement, l'élément 17 de stockage et d'évaporation peut comporter comme illustré à la figure 5 un matériau 19, par exemple un métal, apte à réaliser une combustion catalytique de l'hydrogène.

Néanmoins, la combustion de l'hydrogène étant une réaction exothermique, il est préférable de limiter la conduction thermique entre le matériau 19 apte à générer la combustion de l'hydrogène et la surface extérieure de la paroi de chambre anodique 2 au niveau de la région de condensation 6. Pour cela, l'élément 17 de stockage et d'évaporation peut comporter deux parties, une première partie en contact avec la surface extérieure de la chambre anodique 2 au niveau de la région de condensation 6, et une seconde partie comportant le matériau 19 apte à réaliser la combustion de l'hydrogène. De préférence, la seconde partie 19 est distale, ou éloignée, de ladite surface extérieure de la chambre associée à la région de condensation 6. La première partie est préférentiellement métallique (dans un métal ne favorisant pas la combustion de l'hydrogène), et la seconde partie est préférentiellement formée à partir d'un polymère recouvert de particules, par exemple de platine, de palladium, de nickel ou tout autre élément permettant la combustion de l'hydrogène.

Dans certaines conditions de fonctionnement de la pile à combustible, la quantité d'eau rétrodiffusée dans la chambre anodique 2 peut être supérieure à la quantité que peut gérer une seule région de condensation 6. Dès lors la paroi peut comporter comme illustré à la figure 6 plusieurs régions de condensation 6a, 6b, 6c distinctes de la région principale 5, chaque région pouvant comporter une surface 7a, 7b, 7c associée de condensation. Les régions de condensation 6a, 6b, 6c doivent respecter la condition selon laquelle leur résistance thermique de conduction entre l'extérieur et l'intérieur de la chambre anodique 2 est strictement inférieure à la résistance thermique de la région principale 5 de la paroi 4 de sorte à délimiter les surfaces de condensation 7a, 7b, 7c d'eau à l'intérieur de la chambre anodique 2. Chaque région de condensation 6a, 6b, 6c peut être différente, par exemple du type de celle décrite dans les premier et second modes de réalisation.

Chaque région de condensation peut comporter un canal et une vanne associés (non représenté). Cependant, afin d'éviter la multiplication coûteuse de vannes, il est possible d'envisager (figure 6) un réseau de régions de condensation 6a, 6b, 6c couplé à au moins un canal 8 d'évacuation. Sur la figure 6, le canal 8 d'évacuation relie uniquement la surface de condensation 7a à l'extérieur de la chambre anodique 2. Dès lors, on peut prévoir un système de drainage entre les régions de condensation 6a, 6b, 6c, par exemple en les reliant par des microcanaux 20a, 20b formés par exemple dans la paroi 4. Autrement dit, la paroi 4 comporte des régions de condensation 6a, 6b, 6c reliées entre elles par des microcanaux 20a, 20b, le canal d'évacuation 8 reliant au moins une surface de condensation 7 d'une des régions de condensation à l'extérieur de la chambre anodique 2.

Les mises en oeuvre à plusieurs régions de condensation peuvent être appliquées à tous les modes de réalisation et variantes de la pile à combustible décrite ci-dessus.

Ces mises en oeuvre peuvent également être appliquées à des piles planaires et à des piles à empilement.

Un procédé d'évacuation d'eau formée dans une chambre anodique d'une pile à combustible peut comporter les étapes suivantes :

- abaisser localement la température d'au moins une surface de condensation d'une paroi de la chambre anodique 2 à l'intérieur de la chambre anodique 2,
- condenser une vapeur d'eau obtenue par rétrodiffusion lors du fonctionnement de la pile à combustible sur la surface de condensation 7,
- évacuer l'eau condensée sur la surface de condensation 7 par le canal 8 d'évacuation reliant ladite surface de condensation 7 à l'extérieur de la chambre anodique 2.

En outre, avant l'étape d'évacuation, une étape de détection de la présence d'eau condensée sur la surface de condensation 7 peut être réalisée, l'étape d'évacuation n'étant réalisée que si de l'eau condensée est détectée sur la surface de condensation 7.

Bien entendu, ce procédé peut fonctionner avec tous les modes de réalisation de la pile à combustible, la surface de condensation étant formée par une partie de la région 6 de condensation.

**Revendications**

1. Pile à combustible comprenant une chambre anodique (2) dans laquelle débouche une arrivée (3) d'hydrogène,
   **caractérisée** en ce la pile à combustible comporte une pluralité de cellules élémentaires délimitées par des paires d'électrodes, formant respectivement une anode (10) et une cathode (11), chaque paire étant séparée par une membrane électrolytique (9), les anodes étant toutes disposées dans la chambre anodique (2),
   en ce qu'une paroi (4) séparant l'intérieur de l'extérieur de la chambre anodique (2) comporte :

   - une région principale (5) ayant une première résistance thermique de conduction entre l'extérieur et l'intérieur de la chambre anodique (2),
   - une région de condensation d'eau (6) privilégiée ayant une seconde résistance thermique de conduction entre l'extérieur et l'intérieur de la chambre anodique (2) strictement inférieure à la première résistance thermique de conduction de sorte à délimiter une surface de condensation (7) d'eau à l'intérieur de la chambre anodique (2),

   en ce qu'un canal (8) d'évacuation de l'eau condensée relle la surface de condensation (7) à l'extérieur de la chambre anodique (2),
   en ce qu'elle comporte un élément (17) de stockage et d'évaporation d'eau liquide disposé à l'extérieur de la chambre anodique (2) et agencé avec le canal (8) d'évacuation de sorte à absorber l'eau extraite de ladite chambre anodique (2)
   et en ce que l'élément (17) de stockage et d'évaporation est en contact avec la région de condensation (6).

2. Pile selon la revendication 1, **caractérisée en ce qu'**au moins deux cellules élémentaires comportent une membrane électrolytique (9) commune.

3. Pile selon la revendication 1, **caractérisée en ce que** la pile à combustible comporte une pluralité de membranes électrolytiques (9) individuelles correspondant chacune à une cellule élémentaire.

**4.** Pile selon l'une quelconque des revendications 1 à 3, **caractérisée en ce que** la région de condensation (6) est formée par un amincissement local (12) de la paroi (4) dans la chambre anodique (2).

**5.** Pile selon la revendication 4, **caractérisée en ce que** la région de condensation (6) comporte une excroissance (13) disposée à l'extérieur de la chambre anodique (2) au niveau de l'amincissement (12).

**6.** Pile selon l'une quelconque des revendications 1 à 3, **caractérisée en ce que** la région de condensation (6) comporte un insert comblant un trou de la paroi (4) faisant communiquer l'intérieur de la chambre anodique (2) avec l'extérieur de la chambre anodique (2).

**7.** Pile selon la revendication 6, **caractérisée en ce que** l'insert est réalisé dans un matériau dont la conductivité thermique est supérieure au matériau utilisé pour délimiter la région principale (5).

**8.** Pile selon l'une quelconque des revendications précédentes, **caractérisée en ce que** le canal d'évacuation (8) est relié à une vanne (14) contrôlant l'évacuation de l'eau condensée par ledit canal (8) d'évacuation.

**9.** Pile selon la revendication 8, **caractérisée en ce que** la surface de condensation (7) est agencée avec un capteur (15) de présence d'eau, le capteur (15) étant relié à la vanne (14) de sorte à déclencher une évacuation en cas de présence d'eau (16) sur ladite surface de condensation (7).

**10.** Pile selon l'une des revendications 1 à 9, **caractérisée en ce que** l'élément de stockage et d'évaporation comporte un matériau (19) apte à réaliser une combustion catalytique de l'hydrogène.

**11.** Pile selon l'une quelconque des revendications précédentes, **caractérisée en ce qu'**un matériau poreux hydrophile (18) est disposé dans la chambre anodique (2).

**12.** Pile selon l'une quelconque des revendications précédentes, **caractérisée en ce que** la paroi (4) comporte des régions de condensation (6a, 6b, 6c) reliées entre elles par des microcanaux (20a, 20b), le canal d'évacuation (8) reliant au moins une surface de condensation (7) d'une des régions de condensation à l'extérieur de la chambre anodique (2).

**13.** Procédé de condensation et d'évacuation d'eau formée dans une chambre anodique d'une pile à combustible selon l'une quelconque des revendications 1 à 12, **caractérisé en ce qu'**il comporte les étapes suivantes :

- abaisser localement la température d'au moins une surface de condensation (7) d'une paroi (4) de la chambre anodique (2) à l'intérieur de la chambre anodique (2),
- condenser une vapeur d'eau obtenue par rétrodiffusion lors du fonctionnement de la pile à combustible sur la surface de condensation (7),
- évacuer l'eau condensée sur la surface de condensation (7) par un canal (8) d'évacuation reliant ladite surface de condensation (7) à l'extérieur de la chambre anodique (2).

**14.** Procédé selon la revendication 13, **caractérisé en ce qu'**avant l'étape d'évacuation, une étape de détection de la présence d'eau condensée sur la surface de condensation (7) est réalisée, l'étape d'évacuation n'étant réalisée que si de l'eau (16) condensée est détectée sur la surface de condensation (7).

**Patentansprüche**

**1.** Brennstoffzelle, umfassend eine Anodenkammer (2), in die eine Wasserstoffzuleitung (3) mündet, **dadurch gekennzeichnet, dass** die Brennstoffzelle eine Vielzahl von Einzelzellen umfasst, die durch Elektrodenpaare, welche jeweils eine Anode (10) und eine Kathode (11) bilden, begrenzt sind, wobei jedes Paar durch eine Elektrolytmembran (9) getrennt ist, wobei die Anoden alle in der Anodenkammer (2) angeordnet sind,
dass eine Wand (4), die die Innenseite von der Außenseite der Anodenkammer (2) trennt, umfasst:

- einen Hauptbereich (5), der einen ersten thermischen Leitungswiderstand zwischen der Außenseite und der Innenseite der Anodenkammer (2) aufweist,
- einen bevorzugten Wasserkondensationsbereich (6), der einen zweiten thermischen Leitungswiderstand zwischen der Außenseite und der Innenseite der Anodenkammer (2), weicher streng geringer als der erste thermische Leitungswiderstand ist, aufweist, um eine Wasserkondensationsfläche (7) innerhalb der Anodenkammer (2) zu begrenzen,

dass ein Kanal (8) zum Abführen des kondensierten Wassers die Kondensationsfläche (7) mit der Außenseite der Anodenkammer (2) verbindet,

dass sie ein Element (17) zum Speichern und Verdampfern von flüssigem Wasser umfasst, das außerhalb der Anodenkammer (2) angeordnet und mit dem Abführkanal (8) eingereichtet ist, um das aus der Anodenkammer (2) abgezogene Wasser aufzunehmen,
und dass das Speicher- und Verdampfungselement (17) mit dem Kondensationsbereich (6) in Kontakt ist.

**2.** Zelle nach Anspruch 1, **dadurch gekennzeichnet, dass** wenigstens zwei Einzelzellen eine gemeinsame Elektrolytmembran (9) umfassen.

**3.** Zelle nach Anspruch 1, **dadurch gekennzeichnet**, dans die Brennstoffzelle eine Vielzahl von Einzelektrolytmembranen (9), die jeweils einer Einzelzelle entsprechen, umfasst.

**4.** Zelle nach einem der Absprüche 1 bis 3, **dadurch gekennzeichnet, dass** der Kondensationsbereich (6) durch eine lokale Verjüngung (12) der Wand (4) in der Anodenkammer (2) gebildet ist.

**5.** Zelle nach Anspruch 4, **dadurch gekennzeichnet, dass** der Kondensationsbereich (6) eine Ausstülpung (13), die außerhalb der Anodenkammer (2) im Bereich der Verjüngung (12) angeordnet ist, umfasst.

**6.** Zelle nach einem der Ansprüche 1 bis 3, **dadurch gekennzeichnet, dass** der Kondernsationsbereich (6) einen Einsatz umfasst, der ein Loch der Wand (4) ausfüllt, das die Innenseite der Anodenkammer (2) mit der Außenseite der Anodenkammer (2) verbindet.

**7.** Zelle nach Anspruch 6, **dadurch gekennzeichnet, dass** der Einsatz aus einem Material mit einer höheren Wärmeleitfähigkeit als das zum Begrenzen des Hauptbereichs (5) verwendete Material gefertigt ist.

**8.** Zelle nach einem der vorhergehenden Ansprüche, **dadurch gekennzeichnet, dass** der Abführkanal (8) mit einem Ventil (14) verbunden ist, das das Abführen des kondensierten Wassers durch den Abführkanal (8) steuert.

**9.** Zelle nach Anspruch 8, **dadurch gekennzeichnet, dass** die Kondensationsfläche (7) mit einem Wassersensor (15) eingerichtet ist, wobei der Sensor (15) mit dem Ventil (14) verbunden ist, um ein Abführen bei Vorhandensein von Wasser (16) auf der Kondensationsfläche (7) auszulösen.

**10.** Zelle nach einem der Ansprüche 1 bis 9, **dadurch gekennzeichnet, dass** das Speicher- und Verdampfungselement ein Material (19) umfasst, das geeignet ist, eine katalytische Verbrennung des Wasserstoffs zu vollziehen.

**11.** Zelle nach einem der vorhergehenden Ansprüche, dadurch gekenntzeichnet, dass ein hydrophiles poröses Material (18) in der Anodenkammer (2) angeordnet ist.

**12.** Zelle nach einem der vorhergehenden Ansprüche, **dadurch gekennzeichnet, dass** die Wand (4) Kondensationsbereiche (6a, 6b, 6c), die durch Mikrokanäle (20a, 20b) untereinander verbunden sind, umfasst, wobei der Abführkanal (8) wenigstens eine Kondensationsfläche (7) von einem der Kondensationsbereiche mit der Außenseite der Anodenkammer (2) verbindet.

**13.** Verfahren zur Kondensation und zum Abführen von in einer Anodenkammer einer Brennstoffzelle nach einem der Ansprüche 1 bis 12 gebildeten Wasser, dadurch gekenntzeichnet, dass es die folgenden Schritte umfasst:

- lokales Senken der Temperatur von wenigstens einer Kondensationsfläche (7) einer Wand (4) der Anodenkammer (2) innerhalb der Anodenkammer (2),
- Kondensieren eines durch Rückdiffusion während des Betriebs der Brennstoffzelle erhaltenen Wasserdampfes auf der Kondensationsfläche (7),
- Abführen des kondensierten Wassers auf der Kondensationsfläche (7) über einen Abführkanal (8), der die Kondensationsfläche (7) mit der Außenseite der Anodenkammer (2) verbindet.

**14.** Verfahren nach Anspruch 13, **dadurch gekennzeichnet, dass** vor dem Abführschritt ein Schritt zur Erfassung des Vorhandenseins von kondensiertem Wasser auf der Kondensationsfläche (7) durchgeführt wird, wobei der Abführschritt nur durchgeführt wird, wenn kondensiertes Wasser (16) auf der Kondensationsfläche (7) erfasst wird.

**Claims**

**1.** Fuel cell comprising an anode chamber (2) having a hydrogen inlet (3) emerging into it, **characterized in that** the fuel cell comprises a plurality of elementary cells delimited by pairs of electrodes, respectively forming an anode (10) and a cathode (11), each pair being separated by an electrolyte membrane (9), the anodes being all arranged in the anode chamber (2) **in that** a wall (4) separating the inside of the anode chamber (2) from the outside thereof comprises:

- a main region (5) having a first thermal conduction resistance between the outside and the inside of the anode chamber (2),
- a region for promoting the condensation of water (6) having a second thermal conduction resistance between the outside and the inside of the anode chamber (2) strictly smaller than the first thermal conduction resistance so as to delimit a water condensation area (7) within the anode chamber (2),

in that a drain off channel (8) for removing the condensed water connects the condensation area (7) to the outside of the anode chamber (2),
in that it comprises a liquid water storage and evaporation element (17) arranged outside of the anode chamber (2) and fitted with the drain-off channel (8) so as to absorb the water extracted from said anode chamber (2),
and in that the storage and evaporation element (17) is in contact with the condensation region (6).

2. Cell according to claim 1, **characterized in that** at least two elementary cells comprise a common electrolyte membrane (9).

3. Cell according to claim 1, **characterized in that** the fuel cell comprises a pluralité of individual electrolyte membranes (9) each corresponding to an elementary cell

4. Cell according to any of claims 1 to 3, **characterized in that** the condensation region (6) is formed by a local thinning (12) of the wall (4) in the anode chamber (2).

5. Cell according to claim 4, **characterized in that** the condensation region (6) comprises a protrusion (13) arranged outside of the anode chamber (2) at the level of the thinning (12).

6. Cell according to any of claims 1 to 3, **characterized in that** the condensation region (6) comprises an insert filling a hole in the wall (4) having the inside of the anode chamber (2) communicate with the outside of the anode chamber (2).

7. Cell according to claim 6, **characterized in that** the insert is made of a material having a greater thermal conductivity than the material used to delimit the main region (5).

8. Cell according to any of the foregoing claims, **characterized in that** the drain-off channel (8) is connected to a valve (14) controlling the removal of the condensed water through said drain-off channel (8).

9. Cell according to claim 8, **characterized in that** the condensation area (7) is fitted with a sensor (15) of the presence of water, the sensor (15) being connected to the valve (14) so as to start a removal in the case where water (16) is present on said condensation area (7).

10. Cell according to any of claims 1 to 9, **characterized in that** the storage and evaporation element comprises a material (19) configured to carry out a catalytic combustion of hydrogen.

11. Cell according to any of the foregoing claims, **characterized in that** a hydrophilic porous material (18) is arranged in the anode chamber (2).

12. Cell according to any of the foregoing claims, **characterized in that** the wall (4) comprises condensation regions (6a, 6b, 6c) interconnected by microchannels (20a, 20b), the drain-off channel (8) connecting at least one condensation area (7) of one of the condensation regions to the outside of the anode chamber (2).

13. A method for condensing and removing water formed in an anode chamber of a fuel cell according to any one of claims 1 to 12, **characterized in that** it comprises the steps of:

    - locally lowering the temperature of at least one condensation area (7) of a wall (4) of the anode chamber (2) inside of the anode chamber (2),
    - condensing water vapor obtained by back diffusion during the operation of the fuel cell on the condensation area (7),
    - removing the water condensed on the condensation area (7) through a drain-off channel (8) connecting said condensation area (7) to the outside of the anode chamber (2).

14. Method according to claim 13, **characterized in that** before the removal step, a step of detecting the presence of condensed water on the condensation area (7) is carried out, the removal step being only carried out if condensed water (16) is detected on the condensation area (7).

**Figure 1**

**Figure 2**

**Figure 3**

Figure 4

Figure 5

Figure 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121326 A
- US 20030068543 A